# DEMANDE DE BREVET EUROPEEN

(11) **EP 3 462 007 A1**
(43) Date de publication de la demande: **03.04.2019**
(21) Numéro de dépôt: 18196435.4
(22) Date de dépôt: 25.09.2018
(51) Int. Cl.: F02B 23/08, F02B 23/10, F02B 31/02

(54) **MOTEUR À COMBUSTION INTERNE AVEC INJECTION DIRECTE DE CARBURANT DANS LE SENS DU MOUVEMENT DES GAZ D'ADMISSION AU SEIN DE LA CHAMBRE D'ADMISSION**

(30) Priorité: 29.09.2017 FR 1759056
(71) Demandeur: IFP Energies nouvelles, 92852 Rueil-Malmaison Cedex (FR)
(72) Inventeur: AMBRAZAS, Didier, 94260 FRESNES (FR); GAUTROT, Xavier, 92500 RUEIL-MALMAISON (FR); LAGET, Olivier, 92500 RUEIL-MALMAISON (FR); TROST, Julien, 75004 PARIS (FR)
(74) Mandataire: IFP Energies nouvelles

(57) **Abrégé**

La présente invention concerne un moteur à combustion interne comprenant une chambre de combustion munie d'une unique soupape d'admission (2), d'une unique soupape d'échappement (3), de deux bougies (4a , 4b), et d'un injecteur de carburant (5). De plus, la chambre de combustion comprend des moyens pour former une structure de mouvement aérodynamique tourbillonnaire des gaz d'admission au sein de la chambre de combustion. En outre, l'injecteur de carburant (5) est orienté pour injecter le carburant dans la zone centrale de la chambre de combustion dans le sens de la structure de mouvement aérodynamique tourbillonnaire.

## Description

La présente invention concerne le domaine des moteurs à combustion interne, avec injection directe de carburant.

Ce type de moteur comprend généralement au moins un cylindre, un piston coulissant dans ce cylindre en un mouvement rectiligne alternatif, des moyens d'admission d'un comburant, des moyens d'échappement de gaz brûlés, une chambre de combustion, et des moyens d'injection pour injecter un combustible (carburant) directement dans la chambre de combustion.

Lors de la conception d'un moteur, les contraintes de performances, d'émissions de polluants et de tenue mécanique de la chambre de combustion sont de plus en plus fortes, alors que les moyens de satisfaire ces contraintes peuvent être incompatibles.

Ainsi, l'augmentation des performances entraîne généralement une augmentation des émissions de polluants et des contraintes mécaniques plus fortes.

Pour pallier ces contraintes, et de manière à garantir une faible émission de polluants et une tenue mécanique satisfaisante sur toute la plage de fonctionnement du moteur, l'utilisation de la totalité du carburant présent dans la chambre de combustion, par un comburant comprenant par exemple de l'air à pression ambiante, de l'air suralimenté, ou un mélange d'air (suralimenté ou non) et de gaz brûlés recirculés, est d'une grande importance. En effet, il est nécessaire que le mélange carburé (comburant/combustible) dans la chambre de combustion soit le plus homogène possible.

De plus, afin d'assurer un bon rendement ainsi qu'une bonne vitesse de combustion, il est souhaitable d'avoir un haut niveau de turbulence, et plus spécifiquement un haut niveau d'énergie cinétique turbulente, à l'instant de l'allumage du mélange carburé.

Dans ce but, il existe différentes techniques pour mettre en oeuvre ces turbulences, connues par leur dénomination anglophones : swirl (tourbillon longitudinal), tumble (tourbillon transversal), swumble (composé de swirl et tumble) et squish (jaillissement).

Le swirl, qui est un mouvement macroscopique de rotation du mélange carburé autour d'un axe colinéaire à l'axe du cylindre, se caractérise par une bonne conservation du mouvement au cours du processus d'admission, et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé.

Le tumble est lui aussi un mouvement macroscopique de rotation du mélange carburé mais autour d'un axe globalement perpendiculaire à l'axe du cylindre. Il a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion acceptable. Par ailleurs, ce mouvement est assez sensible à la géométrie de la chambre de combustion ainsi qu'à la loi de levée, aussi bien en termes d'étalement que hauteur de levée maximale.

Le swumble est un mouvement composé de swirl et de tumble. L'utilisation du swumble permet de bénéficier des avantages des deux structures aérodynamiques détaillées ci-dessus, et donc de bénéficier d'une excellente homogénéisation et d'une meilleure vitesse de combustion grâce à un niveau de turbulence plus élevée lors de la phase d'admission que ce qu'on observe avec les meilleurs moteurs à allumage commandé actuels.

Le squish est un mouvement aérodynamique brusque qui apparait lorsque l'air est rapidement « chassé » d'un volume mort.

Différentes conceptions de chambre de combustion ont été réalisées pour mettre en oeuvre ces phénomènes.

Par exemple, le brevet US 2005/0241612 décrit une chambre de combustion avec un fort squish à injection directe, dont l'allumage se fait par au moins une bougie. Cependant, la disposition des soupapes, de l'injecteur et des bougies n'est pas optimisée pour favoriser le swumble, dans le but d'améliorer les performances du moteur (rendement et vitesse de combustion).

Selon un autre exemple, le brevet PH 2010000186 décrit une chambre de combustion générant du squish au travers d'une forme spécifique proche de l'ellipse. Toutefois, pour cette chambre de combustion l'injection de carburant n'est pas directe, ce qui ne favorise pas le swumble et les performances du moteur (rendement et vitesse de combustion).

De plus, dans le cadre de ces chambres de combustion avec une structure aérodynamique tourbillonnaire des gaz d'admission (c'est-à-dire avec swirl et/ou tumble et/ou squish), l'injecteur de carburant est disposé de manière à générer un jet à contre-courant du mouvement aérodynamique d'admission afin de favoriser l'homogénéisation, ce qui génère une cassure de la structure aérodynamique.

Pour pallier ces inconvénients, la présente invention concerne un moteur à combustion interne comprenant une chambre de combustion munie d'une unique soupape d'admission, d'une unique soupape d'échappement, de deux bougies et d'un injecteur de carburant. De plus, la chambre de combustion comprend des moyens pour former une structure de mouvement aérodynamique tourbillonnaire des gaz d'admission au sein de la chambre de combustion. En outre, l'injecteur de carburant est orienté pour injecter le carburant dans la zone centrale de la chambre de combustion dans le sens de la structure de mouvement aérodynamique tourbillonnaire. Ainsi, cette injection du carburant à co-courant permet d'éviter de casser la structure aérodynamique des gaz d'admission, tout en conservant une bonne homogénéité du mélange carburé grâce au niveau de turbulences.

### Le système selon l'invention

L'invention concerne un moteur à combustion interne comprenant au moins un cylindre dans lequel se déplace un piston, ledit cylindre étant associé à une chambre de combustion comprenant une unique soupape d'admission, une unique soupape d'échappement, un injecteur de carburant et deux bougies. Ladite chambre d'admission comprend des moyens pour former une structure de mouvement aérodynamique des gaz d'admission avec des turbulences au sein de ladite chambre de combustion, et ledit injecteur de carburant est orienté pour injecter le carburant dans la zone centrale de ladite chambre de combustion entre lesdites deux bougies dans le sens de ladite structure de mouvement aérodynamique des gaz d'admission.

Selon un mode de réalisation de l'invention, ledit injecteur de carburant est agencé entre ladite soupape d'admission et une bougie.

Conformément à une mise en oeuvre de l'invention, ledit injecteur de carburant dispose d'un usinage de forme cylindrique.

Avantageusement, ledit injecteur de carburant est incliné par rapport à la direction de l'axe du cylindre d'un angle inférieur à 15°, de préférence compris entre 6 et 10°, et préférentiellement sensiblement égal à 8°.

Selon un aspect, ledit injecteur de carburant est agencé à l'intérieur de la chambre de combustion, à proximité de la périphérie de ladite chambre de combustion.

Conformément à une caractéristique, lesdites bougies sont agencées entre ladite soupape d'admission et ladite soupape d'échappement.

Conformément à un mode de réalisation, ledit injecteur de carburant est situé à une distance comprise entre 5 et 15 mm, plus spécifiquement entre 9 et 10 mm de ladite soupape d'admission et à une distance comprise entre 20 et 40 mm, plus spécifiquement entre 25 et 30 mm de la soupape échappement.

De manière avantageuse, lesdites bougies sont espacées l'une de l'autre d'une distance comprise entre 30 et 50 % du diamètre dudit cylindre, de préférence entre 35 et 45 % du diamètre dudit cylindre.

Selon une mise en oeuvre, lesdites bougies et lesdites soupapes d'admission et d'échappement sont agencées de telle sorte que leurs centres forment les sommets d'un carré.

De préférence, ledit carré a une arrête de longueur comprise entre 24 et 31 mm.

Selon un mode de réalisation, la bougie la plus proche dudit injecteur de carburant est inclinée par rapport à la direction de l'axe du cylindre d'un angle compris entre 25 et 30°, et préférentiellement d'un angle compris entre 28 et 29°.

Selon un aspect, la bougie la plus éloignée dudit injecteur de carburant est inclinée par rapport à la direction de l'axe dudit cylindre d'un angle compris entre 25 et 35°, plus spécifiquement entre 28 et 32°, de préférence sensiblement 30°.

Selon une caractéristique, la chambre de combustion a sensiblement une forme elliptique, lesdites soupapes d'admission et d'échappement étant disposées aux extrémités du grand axe de l'ellipse, et lesdites bougies étant disposées à proximité du petit axe de l'ellipse.

Conformément à une mise en oeuvre, lesdits moyens pour former ladite structure de mouvement aérodynamique d'admission comprennent la forme de ladite chambre de combustion et/ou la forme de la conduite d'admission.

En outre, l'invention concerne l'utilisation d'un moteur à combustion interne selon l'une des caractéristiques précédentes pour un cycle de Miller.

### Présentation succincte des figures

D'autres caractéristiques et avantages du système selon l'invention, apparaîtront à la lecture de la description ci-après d'exemples non limitatifs de réalisations, en se référant aux figures annexées et décrites ci-après.
La figure 1 illustre une chambre de combustion selon un mode de réalisation de l'invention.
La figure 2 illustre une vue en coupe d'un moteur à combustion selon un mode de réalisation de l'invention.
La figure 3 illustre une vue en coupe d'un moteur à combustion selon un mode de réalisation de l'invention.
La figure 4 illustre la structure du swumble formé au sein d'un cylindre au moyen de la chambre de combustion selon un mode de réalisation de l'invention.
La figure 5 illustre l'injection de carburant dans la chambre de combustion selon un mode de réalisation de l'invention.
La figure 6 illustre l'évolution du front de flamme dans le cadre d'une combustion au sein de la chambre de combustion selon un mode de réalisation de l'invention.

### Description détaillée de l'invention

La présente invention concerne une un moteur à combustion interne. Le moteur à combustion interne comprend :
- au moins un cylindre dans lequel se déplace un piston,
- une chambre de combustion associée au cylindre, la chambre de combustion comprenant :
   ∘ une unique soupape d'admission, permettant l'arrivée du mélange gazeux dans la chambre de combustion, avant la phase de combustion
   ∘ une unique soupape d'échappement, permettant la sortie des gaz brulés après la phase de combustion,
   ∘ un unique injecteur de carburant, permettant d'injecter directement le carburant dans la chambre de combustion, et
   ∘ deux bougies (appelés également dispositifs d'allumage), permettant l'allumage du mélange gaz et carburant dans la chambre de combustion, et
   ∘ des moyens pour former une structure de mouvement aérodynamique des gaz d'admission avec des turbulences dans la chambre de combustion (en d'autres termes des moyens permettant de former du swumble et/ou du squish dans la chambre de combustion).

Le mélange gazeux peut comprendre de l'air suralimenté ou non, ou un mélange d'air, suralimenté ou non, avec des gaz brulés recirculés.

Le carburant peut être notamment de l'essence, ou du gazole.

Selon l'invention, l'injecteur de carburant est orienté pour injecter le carburant dans le sens de la structure de mouvement aérodynamique des gaz d'admission tout en prévenant le mouillage des parois. En l'occurrence, l'injecteur de carburant est orienté vers le centre de la chambre de combustion, et de manière à privilégier l'injection de carburant entre les deux dispositifs d'allumage. Ainsi, cette injection du carburant à co-courant permet d'éviter de casser la structure aérodynamique des gaz d'admission, tout en conservant une bonne homogénéité du mélange carburé grâce au niveau de turbulences.

L'utilisation de seulement deux soupapes (une pour l'admission et l'autre pour l'échappement) présentent plusieurs avantages de conception, en effet, un tel moteur est moins onéreux (avec un nombre de pièces limité), plus léger et plus compact. De plus, cette conception permet d'avoir plus d'espace disponible pour les bougies et injecteur.

L'utilisation d'une seule soupape d'admission facilite la création de swumble. En effet, il est plus difficile de créer du swumble avec deux conduits d'admission débitants.

Conformément à un aspect de l'invention, l'injecteur de carburant peut disposer d'un usinage de forme cylindrique, pour éviter toute projection de carburant sur les parois. En d'autres termes, l'usinage d'implantation de l'injecteur de carburant se poursuit jusque dans la chambre de combustion (est en saillie dans la chambre de combustion), afin d'assurer que l'injecteur n'est pas en partie obstrué par la chambre de combustion.

Afin de permettre une bonne orientation du carburant, l'injecteur de carburant peut être incliné par rapport à la direction de l'axe du cylindre (généralement l'axe vertical). L'angle d'inclinaison de l'injecteur de carburant par rapport à cette direction peut être inférieur à 15°, de préférence compris entre 6 et 10°, et préférentiellement sensiblement égal à 8°.

Selon une mise en oeuvre de l'invention, l'injecteur de carburant peut être situé à une distance comprise entre 5 et 15 mm de la soupape d'admission, de préférence entre 9 et 10 mm de la soupape d'admission, et à une distance comprise entre 20 et 40 mm, plus spécifiquement entre 25 et 30 mm de la soupape échappement. L'avantage principal de cette configuration est d'avoir l'injecteur de carburant plus proche de l'admission que de l'échappement, ce qui permet une meilleure gestion de sa température et de son refroidissement éventuel.

Conformément à une caractéristique, les bougies peuvent être espacées l'une de l'autre d'une distance comprise entre 30 et 50 % du diamètre du cylindre, de préférence entre 35 et 45 % du diamètre du cylindre. Cet espacement est optimal pour avoir un développement du double front de flamme qui minimise la durée de combustion, tout en évitant des zones de gaz imbrûlés et les zones propices à l'apparition de cliquetis.

Selon une configuration de l'invention, les deux bougies et les deux soupapes (d'admission et d'échappement) peuvent être agencées de telle sorte que leurs centres forment sensiblement les sommets d'un carré. Avantageusement, le carré formé peut avoir une arrête de longueur comprise entre 24 et 31 mm.

De préférence, les bougies peuvent être inclinées par rapport à la direction de l'axe du cylindre (généralement la direction verticale), et plus préférentiellement de deux angles différents. Cela permet de compenser les contraintes liées à l'architecture du moteur à combustion. En effet, il n'était pas possible d'implanter les bougies verticalement dans la chambre à leur emplacement optimal. En les inclinant on parvient à recentrer le point d'allumage sans déplacer toute la bougie.

Selon un exemple de réalisation, la bougie la plus proche de l'injecteur de carburant peut être inclinée par rapport à la direction de l'axe du cylindre d'un angle compris entre 25 et 30°, de préférence d'un angle compris entre 28 et 29°.

Selon un exemple de réalisation, la bougie la plus éloignée de l'injecteur de carburant peut être inclinée par rapport à la direction de l'axe du cylindre d'un angle compris entre 25 et 35°, plus spécifiquement entre 28 et 32°, de préférence d'un angle de sensiblement 30°.

Les moyens pour former la structure aérodynamique d'admission avec des turbulences (swumble et/ou squish) peuvent comprendre notamment la forme de la chambre de combustion et/ou la forme de la conduite d'admission.

Selon un mode de réalisation de l'invention, la chambre de combustion peut avoir sensiblement une forme d'ellipse. Cette forme favorise un squish important. En effet, le ratio entre la surface de cette ellipse et la surface d'une section du cylindre est particulièrement faible, ce qui correspond à un squish important.

Afin de favoriser le swumble et le squish, les composants de la chambre de combustion peuvent être disposés de manière spécifique :
- la soupape d'admission et la soupape d'échappement sont agencées aux extrémités du grand axe de l'ellipse, ainsi, les soupapes sont opposées l'une et l'autre, et sont éloignées,
- les bougies sont agencées à proximité du petit axe de l'ellipse, ainsi les bougies sont situées entre la soupape d'admission et la soupape d'échappement, et
- l'injecteur de carburant est situé à l'intérieur de l'ellipse, à proximité de sa périphérie, entre la soupape d'admission et une bougie, cet emplacement favorise le mélange des gaz et du carburant grâce au mouvement de swumble.

Cette conception elliptique de la chambre de combustion associée à cette disposition des composants permettent de générer une structure aérodynamique de swumble, et de favoriser l'homogénéisation du mélange carburé. De plus, elle permet une vitesse de combustion élevée tout en prévenant les phénomènes d'auto-inflammation. En effet, on rappelle que le swumble permet de bénéficier d'une excellente homogénéisation et d'une meilleure vitesse de combustion grâce à un niveau de turbulence plus élevée lors de la phase d'admission que ce qu'on observe avec les meilleurs moteurs à allumage commandé actuels.

Selon un mode de réalisation de l'invention, l'ellipse peut comporter un décrochement dirigé vers la soupape d'admission. Le décrochement est agencé sensiblement symétriquement à l'injecteur de carburant par rapport au grand axe. En d'autres termes, le décrochement est situé sur le côté de la soupape d'admission opposé au côté sur lequel est agencé l'injecteur de carburant. Le décrochement est donc situé entre une bougie et la soupape d'admission. On appelle décrochement, une modification de la forme extérieure de l'ellipse, cette modification étant réalisée vers l'intérieur de l'ellipse. Le décrochement permet de renforcer des turbulences de type swirl. En effet, le décrochement a pour but de favoriser la formation de la partie swirl du mouvement de swumble. Ce décrochement crée un prolongement du conduit dans la chambre qui permet de donner une continuité dans la formation de la structure aérodynamique.

Conformément à une mise en oeuvre de l'invention, la soupape d'admission peut être tangente à l'ellipse. Ainsi, le remplissage de la chambre de combustion est optimisé.

Selon une caractéristique de l'invention, la soupape d'échappement peut être tangente à l'ellipse. De cette manière, la vidange de la chambre de combustion est optimisée.

Selon une configuration de l'invention, les bougies ne sont pas disposées sur la périphérie de l'ellipse. Ce placement des bougies permet une propagation optimale du front de flamme afin d'éviter cliquetis et gaz imbrulés.

Selon un mode de réalisation de l'invention, le moteur à combustion peut comprendre un conduit d'admission d'air, relié à la chambre de combustion, et dans lequel est placée la soupape d'admission, configuré pour initier un mouvement de swumble, c'est-à-dire un mouvement de rotation de l'air selon l'axe du cylindre (tumble) et un mouvement de rotation selon un axe perpendiculaire à l'axe du cylindre (swirl).

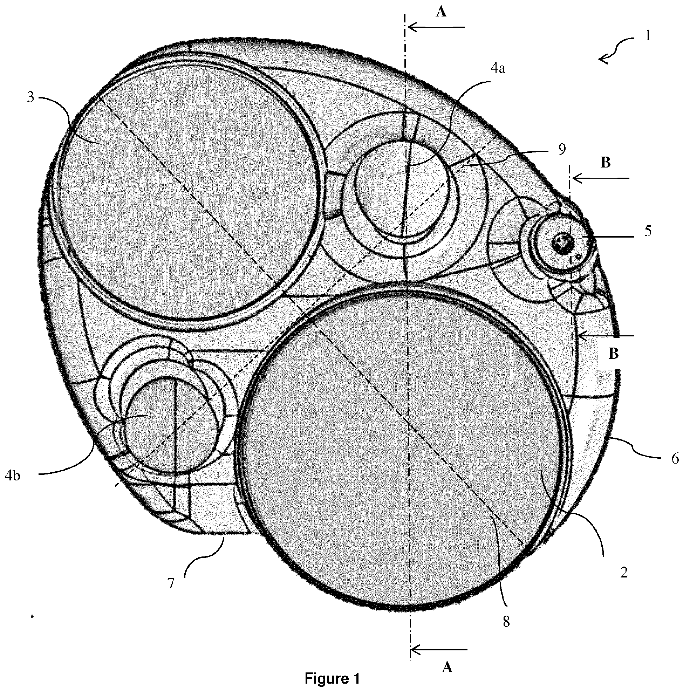

La figure 1 illustre, schématiquement et de manière non limitative une chambre de combustion 1 selon un mode de réalisation de l'invention. La chambre de combustion 1 a sensiblement une forme d'ellipse 6. L'ellipse 6 est définie par son grand axe 8 et son petit axe 9. La chambre de combustion 1 comporte une unique soupape d'admission 2, située à une extrémité d'un demi grand axe 8. La soupape d'admission 2 est tangente à l'ellipse 6. La chambre de combustion 1 comporte une unique soupape d'échappement 3, située à une extrémité d'un demi grand axe 8. Cette extrémité est opposée à l'extrémité à laquelle se situe la soupape d'admission 2. La soupape d'échappement 3 est tangente à l'ellipse 6. La chambre de combustion 1 comporte en outre deux bougies 4a et 4b. Les bougies 4a et 4b sont disposées sensiblement sur le petit axe 9 (à proximité du petit axe 9). En outre, la chambre de combustion 1 comprend un unique injecteur de carburant 5. L'injecteur de carburant 5 est situé à l'intérieur de l'ellipse 6, à sa périphérie. De plus, l'injecteur de carburant 5 est situé entre la soupape d'admission 2 et une bougie 4a. Du côté opposé à l'injecteur 5, l'ellipse 6 comporte un décrochement rectiligne 7. Le décrochement rectiligne 7 est disposé entre une bougie 4b et la soupape d'admission 2. Le décrochement rectiligne 7 est dirigé vers la soupape d'admission 2.

En plus de favoriser le squish, la forme d'ellipse 6 telle qu'elle est présentée favorise le développement du mouvement de swirl qui prend naissance dans le conduit d'admission. Cette chambre de combustion en est en quelque sorte, le prolongement.

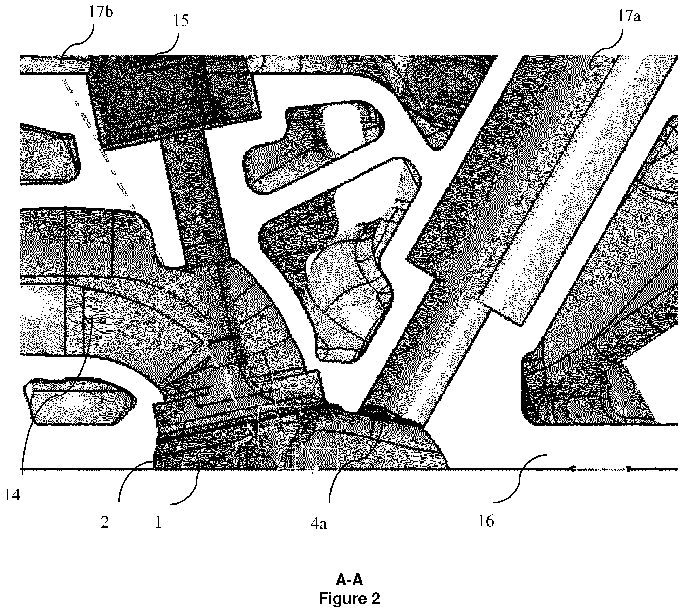

La figure 2 illustre, schématiquement et de manière non limitative, une vue partielle en coupe d'un moteur à combustion selon un mode de réalisation de l'invention. Il s'agit d'une coupe selon l'axe AA de la figure 1. La figure 2 illustre au sein du carter moteur 16 (en blanc sur la figure) notamment une chambre de combustion 1, une soupape d'admission 2, située entre une conduite d'admission 14 et la chambre de combustion, et une bougie 4a. Sur cette figure, est également représenté l'actionneur 15 de la soupape d'admission 2. En outre, on a illustré sur cette figure, les axes 17a et 17b respectivement des bougies 4a et 4b. L'axe 17a correspond à la bougie 4a, et l'axe 17b correspond à la bougie 4b (non présente dans le plan de coupe AA). Les deux bougies 4a et 4b sont inclinées par rapport à la verticale (c'est-à-dire la direction du cylindre), les angles d'inclinaison des axes 17a et 17b sont différents.

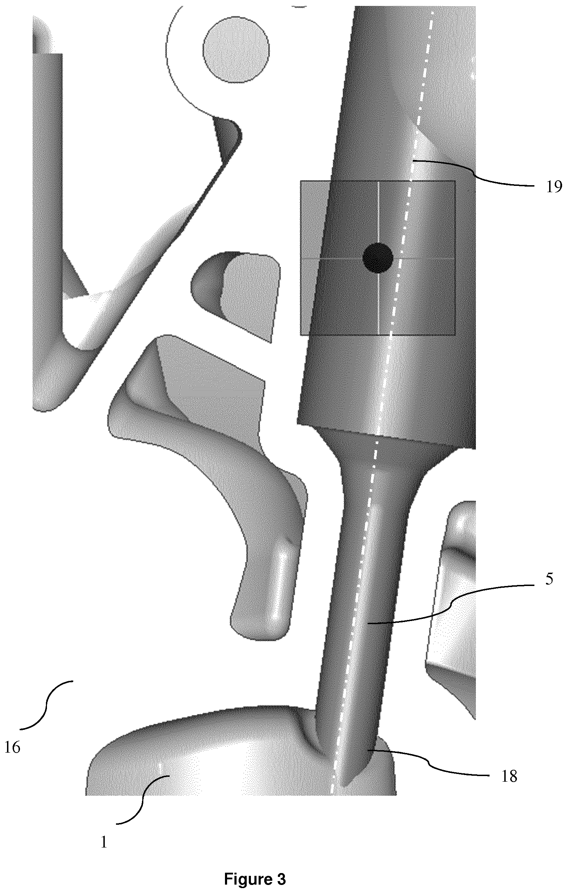

La figure 3 illustre, schématiquement et de manière non limitative, une vue partielle en coupe d'un moteur à combustion selon un mode de réalisation de l'invention. Il s'agit d'une coupe selon l'axe BB de la figue 1. La figure 3 illustre au sein du carter moteur 16 (en blanc sur la figure) notamment une chambre de combustion 1 et un injecteur de carburant 5. L'injecteur de carburant 5 comporte un usinage de forme sensiblement cylindrique 18 en saillie au sein de la chambre de combustion 1, afin d'assurer que l'injecteur n'est pas en partie obstrué par la chambre de combustion. En outre, on a illustré sur cette figure, l'axe 19 de l'injecteur de carburant 5. L'injecteur de carburant est d'incliné par rapport à la verticale (c'est-à-dire la direction du cylindre), l'angle d'inclinaison de l'axe 19 est inférieur aux angles 17a et 17b des bougies 4a et 4b de la figure 2.

Selon un aspect de l'invention, le moteur à combustion interne au moins un cylindre. Par exemple, le moteur à combustion peut comprendre deux, trois ou quatre cylindres.

Selon une caractéristique de l'invention, le moteur à combustion peut comprendre un circuit de recirculation des gaz brulés (EGR).

L'invention porte sur un moteur à combustion conçu spécifiquement pour obtenir une bonne homogénéité du mélange carburé et ainsi assurer un meilleur rendement de combustion.

En particulier, le moteur à combustion selon l'invention est particulièrement adapté pour une utilisation en cycle dit de « Miller » sur une plage étendue de fonctionnement. Ce cycle se caractérise par une fermeture de la soupape d'admission avant le point mort bas du piston. Cela permet d'avoir un travail récupéré plus important en plus d'un refroidissement de la charge admise.

Un tel moteur à combustion peut être utilisé dans le domaine des transports, par exemple routier ou aéronautique, ou dans le domaine des installations stationnaires, tel qu'un groupe électrogène.

### Exemple d'application

Les caractéristiques et avantages du moteur à combustion selon l'invention apparaîtront plus clairement à la lecture de l'exemple d'application ci-après.

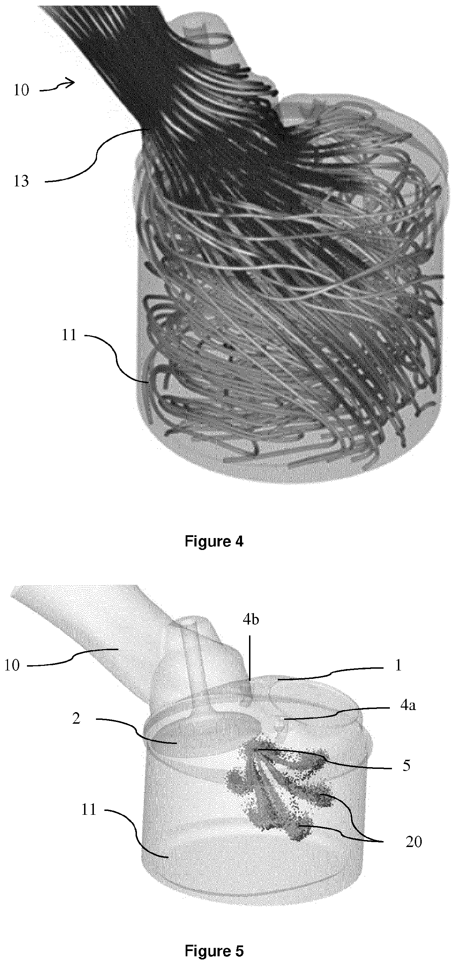

La figure 4 présente, schématiquement et de manière non limitative, une visualisation graphique du la structure aérodynamique de swumble au sein de la conduite d'admission 10 et du cylindre 11, pour un moteur équipé d'une chambre de combustion selon l'invention. La figure 4 illustre différents flux de gaz 13 dans ces éléments.

On constate également que la durée de combustion est indépendante de l'étalement et du calage de la loi de distribution, ce qu'on ne retrouve pas sur les moteurs à allumage commandé actuels. Cela permet d'impacter positivement le rendement global du moteur à combustion interne.

Ainsi, la chambre de combustion selon l'invention permet un fort swumble dans le cylindre ce qui optimise l'efficacité de la combustion, et donc du moteur à combustion.

La figure 5 présente, schématiquement et de manière non limitative, une visualisation de l'injection de carburant au sein de la chambre de combustion 1 et du cylindre 11, pour un moteur de combustion selon l'invention. La chambre de combustion 1 est conforme au mode de réalisation de la figure 1 : elle est de forme sensiblement elliptique et comporte une soupape d'admission 2, deux bougies 4a et 4b, un injecteur de carburant 5. L'injecteur de carburant 5 est orienté pour injecter le carburant dans la dans le sens de la structure de mouvement aérodynamique des gaz d'admission tout en prévenant le mouillage des parois. En l'occurrence, l'injecteur de carburant 5 est orienté vers le centre de la chambre de combustion 1, et de manière à privilégier l'injection de carburant entre les deux bougies 4a et 4b. La figure 5 illustre en gris foncé plusieurs sprays 20 de carburant issus de l'injecteur de carburant 5. Ces sprays sont dirigés dans la zone centrale entre les deux bougies 4a et 4b.

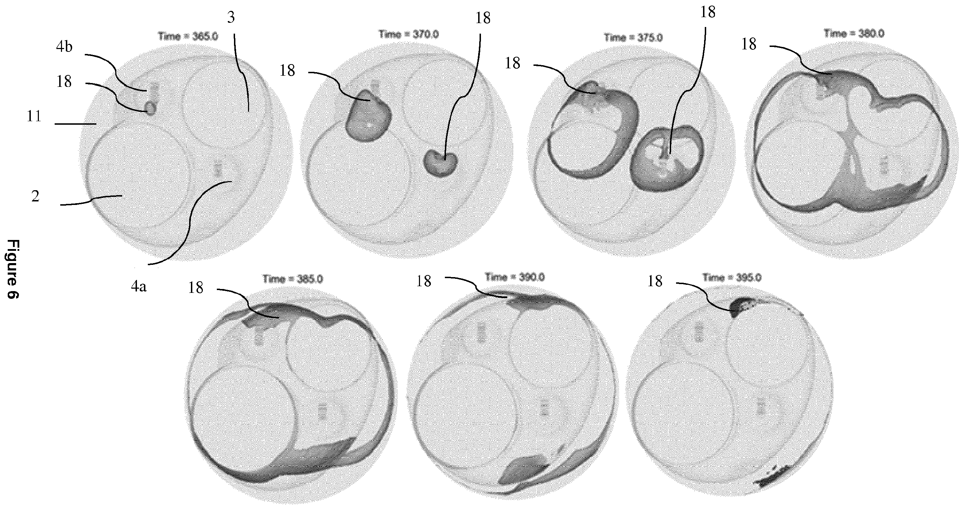

La figure 6 présente l'évolution du front de flamme lors de la combustion pour un moteur comprenant une chambre de combustion telle qu'illustrée aux figures 1 et 2. La figure 6 étant une vue de dessus du cylindre 11 et de la chambre de combustion. Le moteur à combustion comprend une chambre de combustion elliptique avec une unique soupape d'admission 2, une unique soupape d'échappement 3, deux bougies 4a et 4b, un injecteur (non représenté). Chaque vignette de la figure 6 correspond à un temps (Time) différent (le temps est défini par l'angle vilebrequin, en prenant comme référence 360° correspond au point mort haut du piston pendant la phase de combustion du moteur. Les zones sombres 18 correspondent au front de flamme. Sur ces vignettes, on y voit clairement le bénéfice du double point d'allumage optimisé selon l'invention. En effet, on remarque une que le front de flamme est circulaire et ne laisse aucune « zone morte » où résideraient des gaz imbrûlés

## Revendications

1. Moteur à combustion interne comprenant au moins un cylindre (11) dans lequel se déplace un piston, ledit cylindre (11) étant associé à une chambre de combustion comprenant une unique soupape d'admission (2), une unique soupape d'échappement (3), un injecteur de carburant (5) et deux bougies (4a, 4b), **caractérisé en ce que** ladite chambre d'admission comprend des moyens pour former une structure de mouvement aérodynamique des gaz d'admission avec des turbulences au sein de ladite chambre de combustion, et **en ce que** ledit injecteur de carburant (5) est orienté pour injecter le carburant dans la zone centrale de ladite chambre de combustion entre lesdites deux bougies (4a, 4b) dans le sens de ladite structure de mouvement aérodynamique des gaz d'admission.

2. Moteur à combustion selon la revendication 1, dans lequel ledit injecteur de carburant (5) est agencé entre ladite soupape d'admission (2) et une bougie (4a).

3. Moteur à combustion selon l'une des revendications précédentes, dans lequel ledit injecteur de carburant (5) dispose d'un usinage de forme cylindrique.

4. Moteur à combustion selon l'une des revendications précédentes, dans lequel ledit injecteur de carburant (5) est incliné par rapport à la direction de l'axe du cylindre (11) d'un angle inférieur à 15°, de préférence compris entre 6 et 10°, et préférentiellement sensiblement égal à 8°.

5. Moteur à combustion selon l'une des revendications précédentes, dans lequel ledit injecteur de carburant (5) est agencé à l'intérieur de la chambre de combustion, à proximité de la périphérie de ladite chambre de combustion.

6. Moteur à combustion selon l'une des revendications précédentes, dans lequel lesdites bougies (4a, 4b) sont agencées entre ladite soupape d'admission (2) et ladite soupape d'échappement (3).

7. Moteur à combustion selon l'une des revendications précédentes, dans lequel ledit injecteur de carburant (5) est situé à une distance comprise entre 5 et 15 mm, plus spécifiquement entre 9 et 10 mm de ladite soupape d'admission (2) et à une distance comprise entre 20 et 40 mm, plus spécifiquement entre 25 et 30 mm de la soupape échappement (4a).

8. Moteur à combustion selon l'une des revendications précédentes, dans lequel lesdites bougies (4a, 4b) sont espacées l'une de l'autre d'une distance comprise entre 30 et 50 % du diamètre dudit cylindre (11), de préférence entre 35 et 45 % du diamètre dudit cylindre (11).

9. Moteur à combustion selon l'une des revendications précédentes, dans lequel lesdites bougies (4a, 4b) et lesdites soupapes d'admission (2) et d'échappement (3) sont agencées de telle sorte que leurs centres forment les sommets d'un carré.

10. Moteur à combustion selon la revendication 9, dans lequel ledit carré a une arrête de longueur comprise entre 24 et 31 mm.

11. Moteur à combustion selon l'une des revendications précédentes, dans lequel la bougie la plus proche (4a) dudit injecteur de carburant (5) est inclinée par rapport à la direction de l'axe du cylindre d'un angle compris entre 25 et 30°, et préférentiellement d'un angle compris entre 28 et 29°.

12. Moteur à combustion selon l'une des revendications précédentes, dans lequel la bougie la plus éloignée (4b) dudit injecteur de carburant (5) est inclinée par rapport à la direction de l'axe dudit cylindre d'un angle compris entre 25 et 35°, plus spécifiquement entre 28 et 32°, de préférence sensiblement 30°.

13. Moteur à combustion selon l'une des revendications précédentes, dans lequel la chambre de combustion a sensiblement une forme elliptique (6), lesdites soupapes d'admission (2) et d'échappement (3) étant disposées aux extrémités du grand axe de l'ellipse (8), et lesdites bougies (4a, 4b) étant disposées à proximité du petit axe de l'ellipse (9).

14. Moteur à combustion selon l'une des revendications précédentes, dans lequel lesdits moyens pour former ladite structure de mouvement aérodynamique d'admission comprennent la forme de ladite chambre de combustion et/ou la forme de la conduite d'admission.

15. Utilisation d'un moteur à combustion interne selon l'une des revendications précédentes pour un cycle de Miller.
